# EUROPEAN PATENT SPECIFICATION

(11) **EP 2 542 317 B1**
(45) Date of publication and mention of the grant of the patent: **07.12.2016**
(21) Application number: 11706796.7
(22) Date of filing: 21.02.2011
(51) Int. Cl.: B01D 19/04, C11D 3/00, C08G 77/46, C08G 77/26, C11D 7/00

(54) **AMINO SILICONE BASED ANTIFOAM AGENT AND ITS PROCESS OF MANUFACTURE**
ANTISCHAUMMITTEL AUF BASIS VON AMINOSILIKON UND VERFAHTEN ZU DESSEN HERSTELLUNG
AGENT ANTIMOUSSE À BASE D'AMINOSILICONE ET SON PROCÉDÉ DE FABRICATION

(30) Priority: 02.03.2010 IN KA01982010
(43) Date of publication of application: 09.01.2013
(73) Proprietor: Wacker Chemie AG, 81737 München (DE)
(72) Inventor: PAUL, Amit Kumar, Kolkata 700 061 (IN)
(74) Representative: Deffner-Lehner, Maria
(86) International application number: PCT/EP2011/052510
(87) International publication number: WO 2011/107361

(56) References cited:
- EP-A1- 0 685 250
- EP-A2- 0 718 018
- DE-C1- 3 928 867
- JP-A- 11 158 287
- JP-A- 59 069 110
- JP-A- 2007 303 016
- US-A- 4 637 890
- US-A- 5 147 578
- US-A1- 2001 056 059
- US-A1- 2009 036 618
- US-B1- 6 326 061

## Description

The present invention relates to an antifoam powder involving delay antifoam composition, and in particular, relates to the preparation of the said antifoam powder comprising modified anti foam amino silicone/ organopolysiloxane fluid absorbed in carrier filler. The antifoam powder may be used in laundry detergent formulation specially in fabric wash adapted for excellent antifoaming effect in rinsing cycle while maintaining almost similar foaming nature compared to 'detergent without antifoam' in washing cycles. The present invention also relates to the modified antifoam amino silicone/ organopolysiloxane fluid and to a process of synthesis of the said modified amino silicone/ organopolysiloxane based delay antifoam compound/ agent present in the said antifoam powder or antifoam fluid for use in detergent formulation.

Specifically, the present invention is thus directed to not only save huge amount of waste water but also help to preserve massive amount precious clean water for desirable use and application. Advantageously, therefore the present invention in other words is in the line of green water balance targeted to reduce pollution and save the world from future massive climatic disasters or ecological imbalances.

More specifically, the modified amino silicone or organopolysiloxane in powder form or fluid form can be readily used for diverse applications such as in personnel care, specially hair care, home care, textile care, and the like.

In hand washing process, water is taken in a bucket or in fabric's soaking container or washing tub in washing machine. Thereafter, desired quantity of detergent is added to generate lather by hand shaking or run for a while the washing tub in machines. This is followed by immersion of the dirt fabrics for soaking for 10 to 30 min. After soaking period, the fabric is rubbed by hand to remove dirt or the washing cycle is run for 10 to 20 min in case of machines wash.

For rinsing, the dirt water is drained out and removes excess dirt water by squeezing the fabrics. Thus each such rinsing cycle consists of squeezing the fabrics and washing the fabrics with fresh water. Such rinsing cycle is repeated for four to five times for hand wash or in case of machine, four to five times rinse cycle is followed to remove all foams before final spinning.

It is important due to the fact of traditional concept of no foam means in washing cycle means not a good detergent. So, all detergent manufacturers have a common requirement of foaming during washing and no foaming during rinsing that claims of saving cost and water of such kind of detergent.

Attempts have been made in the past to resolve this problem by secondary method, called single rinse concept where during rinsing cycle, use a defoamer containing fabric conditioner where fabric conditioner conditioned the fabric at rinsing cycle and in addition kills the all residual foam. This concept was not very much successful in case of hand washing process, since use of fabric conditioner in this class is considered to be a luxury and people of hand-washing segment uses hand washing due to money constraint for fabric cleaning.

Considering the wastage of water and formulation cost for normal detergent used in hand wash or machine wash, there has been a need for detergent formulations which when used for washing fabrics most likely generates preferred amount of foaming during washing cycle without affecting the cleaning nature of the detergent but also have antifoaming activity in rinsing cycle so that one or two rinse is enough to clean the fabric. It is however extremely difficult to provide for such characteristics in detergent formulations which would favour both the washing and rinsing cycles and make washing of clothes/fabrics more convenient and user friendly apart from taking care of avoiding unnecessary wastage of valuable water and saving the environment from unnecessarily wastage of water in hand wash and/or machine washing. It is also important that such advancement directed to washing formulations adapted for effective washing avoiding wastage of water is attended at cost-effective rates since the market is very much price sensitive and the success of new detergent heavily depend on cost as well.

US 4637890 disclosed a detergent composition that acts as defoamer in rinsing cycles. Detergent composition revealed a composition for suds/foams controlling prills comprising fatty acid soap, quaternary ammonium salt and silicone fluid for suds suppresser. It is indicated in the patent that the prills dissolve in the relatively high pH (from 9 to 10.5 pH) in washing cycles and prills are not active at high pH. Prills become active to suppress suds at low pH with a concept of lower pH at rinsing cycles where detergent contained less in rinsed water. However, the examples didn't direct to any actual applications and additionally it was not clear whether the detergent was effective in hand washing or machine-assisted hand washing. It is understood from the disclosure that effectiveness of suppressing foam by silicone defoamer was highly dependent on prills formation with the help of fatty acid soap and quaternary ammonium compound. According to the disclosure a normal silicone fluid (alkylated polysiloxane) used as defoamer where normal silicones defoaming activity was controlled in washing cycle by way of insolubility of prills at alkaline pH.

US 4894117 disclosed a composition of agglomerated granules for the delay release of antifoaming agent in laundry system. It particularly relates to laundry detergent composition comprising silicone antifoam adsorbed on a powdered water soluble carrier selected from modified cellulose carriers which are subsequently agglomerated into granular form by mixing in presence of a solvent for the carrier. This prior art disclosed a series of granulated laundry additives wherein standard silicone antifoam were encapsulated. These different granulated laundry additives have different silicone antifoam release time depending on type of cellulosed used and size of the granules. It is clearly apparent that such type encapsulated laundry additive is only suitable for machine wash but totally not suited in case of hand washing or machine-assisted hand washing since time of washing would vary from one user to another, one region to another region and one country to another country. Thus while a detergent composition having laundry additive granules with encapsulated silicone antifoam may be acceptable to one user but not suited to the requirement of another user due to different washing time where user can see no foam in washing cycles due to longer washing time or more water used in rinsing cycle due to shorter washing time since particular granules used in the detergent for washing would have a fixed time for releasing encapsulated silicones. According to the disclosure conventional silica filled polydimethyl siloxane used as defoamer to make encapsulated defoamer granules.

EP 254 499 B1 disclosed a method for the preparation of a silicone defoamer composition, said method comprising heating a mixture comprising a blend of organopolysiloxanes (1) and (2)
(3) silanes or their partial hydrolysis condensates or siloxane resins,
(4) finely divided filler, preferably silica,
(5) reaction catalyst, preferably KOH,
(6) compounds like alkylene glycols, polyhydric alcohols, carboxylic acids and their esters, nonionic surfactants, polyoxyethylene anionic surfactants, polyether-modified silicones, nonionic fluorinated surfactants and OH-containing polymeric compounds like hydroxyethylcellulose.

A silicone defoamer composition is obtained by reacting a blend of trimethylsilyl-terminated polydimethylsiloxane and silanol-terminated polydimethylsiloxane with polyoxyethylene-polyoxypropylene copolymers and with silica.

The defoaming activity of the composition is disclosed but neither the use in a detergent composition is described nor can it be used as a delay defoamer by permitting foaming during the washing stage but inhibiting foaming during rinsing operations.

EP 685 250 A1 discloses an anti-foam powder containing an amino modified silicone anti-foam fluid with silica as a carrier.

When used in detergents it reduces foaming during the rinsing stage but also affects the foaming and cleaning performance during the washing operation, i.e. reduces the foaming during washing cycle which is an undesirable effect.

It is thus apparently clear from the above state of the art that all prior arts depend on encapsulation of silicone or silicone defoamer where both the type of chemicals have strong antifoaming action. The activity of delay antifoam or suppression of suds in rinsing cycles is dependent on many other parameters as discussed above. Therefore, application of such type of available antifoams is only possible in systematic washing system like machine wash but impossible to work in hand washing or machine-assisted hand washing because of wide variation of washing habit from one user to another user. On the other hand, a product that have delayed antifoam action or suppression of suds in the rinsing cycle of hand washing or machine-assisted hand washing, obviously performs better in all automated machine wash.

It is thus the basic object of the invention to develop an antifoam powder composition comprising modified anti foam amino silicone/ organopolysiloxane fluid together with carrier filler that would easily mix with hand wash detergent or machine wash detergent having no negative effect on detergent effect and preferred foaming nature of the detergent during washing cycle while providing for excellent antifoaming activity in the rinsing cycle.

Another object of the present invention is directed to provide an antifoam silicone fluid which may be used in a laundry detergent formulation and will save huge amount of fresh water and reduce the wastage of valuable water required in hand wash detergent or machine detergent applications for cloth/fabric washing.

Another object of the present invention is directed to a selective provision of an antifoam powder composition comprising modified amino silicone/ organopolysiloxane fluid together with carrier filler which may be used in detergent composition with minimum dosage of powder antifoam incorporation in the detergent formulation directed to effective washing and avoiding wastage of water during the rinsing stage.

Another object of the present invention is directed to synthesize modified amino silicone/ organopolysiloxane based delay antifoam formulations in simple way to optimize the cost of the organopolysiloxane compound that would have minimum impact in the formulation cost of final detergent.

Yet another object of the present invention is directed to an antifoam powder which may be used in a detergent composition with excellent anti-foaming effect during rinsing while generate preferred foaming in washing cycle.

Still another object of the present invention is directed to a modified amino silicone / organopolysiloxane in fluid form or in powder form for use in diverse applications such as in personnel care, specially hair care, home care, textile care, and the like.

Yet another object of the present invention is directed to an antifoam powder which may be used in a detergent formulation comprising a low effective amount of the said powder antifoam composition adapted for making the said detergent formulation cost effective.

According to the basic aspect of the invention there is provided an antifoam powder comprising of
(1) 10 to 35 % by weight of a modified amino silicone antifoam fluid of the formula

   **X**R₂Si(OSi**A**R)ₙ(OSiR₂)ₘOSiR₂**X** (I)

   where
   - **A**: is an amino radical of the formula -R¹-[NR²-R³-]ₓNR²₂ or an amino radical of the formula selected from the group - (CH₂)₃NHC₆H₁₁, - (CH₂)₃NH(CH₂)₂NHC₆H₁₁, - (CH(CH₃)CH₂CH₂)NHC₆H₁₁, - (CH(CH₃)CH₂CH₂)NH(CH2)NHC₆H₁₁, - (CH₂)NHC₆H₁₁ and - (CH₂)NH(CH₂)₂NHC₆H₁₁, or the protonated amino forms of the amino radical A and/or acylated amino forms of the above said amino radicals **X** is **R** or a polyoxyalkylene group G of the formula -R⁴-(O-R⁵)_{y}-O-R⁶
   - R: is a monovalent hydrocarbon radical having from 1 to 18 carbon atoms,
   - R¹: is a C₁-C₁₀-alkylene radical, preferably a radical of the formula -CH₂CH₂CH₂-,
   - R²: is a hydrogen atom or a C₁-C₄-alkyl radical, preferably a hydrogen atom,
   - R³: is a C₁-C₁₀-alkylene radical, preferably a radical of the formula -CH₂CH₂-,
   - R⁴: is a C₁-C₁₀-alkylene radical, preferably a radical of the formula -CH₂CH₂CH₂-,

   - R⁵: is a C₁-C₄-alkylene radical, preferably a radical of the formula -CH₂CH₂- or -CH₂CH₂(CH₃)- or mixtures of them,
   - R⁶: is a hydrogen atom or an C₁-C₄-alkyl radical, preferably a hydrogen atom or a methyl radical, more preferably a hydrogen atom,
   - n: is an integer from 1 to 6, preferably from 1 to 3,
   - m: is an integer from 1 to 200, preferably from 1 to 80,
   - x: is 0 or 1 and
   - y: is an integer from 5 to 20, preferably from 5 to 12,
   with the provision that on average from 30 to 60 mol%, preferably 50 mol%, of radicals **X** are polyoxyalkylene groups **G**; and
(2) 65 to 90 % by weight of a carrier filler selected from the group comprising of sodium carbonate, sodium sulphate, aluminium silicate, potassium carbonate, potassium sulphate, sodium bicarbonate, potassium bicarbonate and zeolite.

According to another aspect of the invention there is provided a process for preparing the antifoam powder comprising the steps of
(i) stirring and drying the carrier filler at a temperature from 100°C to 150 °C,
(ii) mixing the dried carrier filler with the modified amino silicone antifoam fluid of formula (I) at a temperature from 100°C to 150°C and
(iii)cooling and obtaining therefrom the said antifoam powder. According to yet another aspect of the invention there is provided an antifoam silicone fluid adapted for use in fluid/ powder based detergent formulations comprising of formula **X**R₂Si(OSi**A**R)ₙ₍OSiR₂)ₘOSiR₂**X** (I)
where
- A: is an amino radical of the formula -R¹- [NR²-R³-]ₓNR²₂ or an amino radical of the formula selected from the group - (CH₂)₃NHC₆H₁₁, - (CH₂)₃NH(CH₂)₂NHC₆H₁₁, - (CH(CH₃)CH₂CH₂)NHC₆H₁₁, - (CH(CH₃)CH₂CH₂)NH(CH₂)NHC₆H₁₁, - (CH₂)NHC₆H₁₁ and - (CH₂)NH(CH₂)₂NHC₆H₁₁, or the protonated amino forms of the amino radical A and/or acylated amino forms of the above said amino radicals **X** is **R** or a polyoxyalkylene group G of the formula -R⁴-(O-R⁵)_{y}-O-R⁶
- R: is a monovalent hydrocarbon radical having from 1 to 18 carbon atoms,
- **R**¹: is a C₁-C₁₀-alkylene radical, preferably a radical of the formula -CH₂CH₂CH₂-,
- **R**²: is a hydrogen atom or a C₁-C₄-alkyl radical, preferably a hydrogen atom,
- **R**³: is a C₁-C₁₀-alkylene radical, preferably a radical of the formula -CH₂CH₂-,
- **R**⁴: is a C₁-C₁₀-alkylene radical, preferably a radical of the formula -CH₂CH₂CH₂-,
- **R**⁵: is a C₁-C₄-alkylene radical, preferably a radical of the formula -CH₂CH₂- or -CH₂CH₂(CH₃) - or mixtures of them,
- **R**⁶: is a hydrogen atom or an C₁-C₄-alkyl radical, preferably a hydrogen atom or a methyl radical, more preferably a hydrogen atom,
- n: is an integer from 1 to 6, preferably from 1 to 3,
- m: is an integer from 1 to 200, preferably from 1 to 80,
- x: is 0 or 1 and
- y: is an integer from 5 to 20, preferably from 5 to 12,
with the provision that on average from 30 to 60 mol%, preferably 50 mol%, of radicals X are polyoxyalkylene groups G.

Examples of hydrocarbons R are alkyl radicals, such as the methyl, ethyl, n-propyl, isopropyl, 1-n-butyl, 2-n-butyl, isobutyl, tert-butyl, n-pentyl, isopentyl, neopentyl and tert-pentyl radical, hexyl radicals, such as the n-hexyl radical, heptyl radicals, such as the n-heptyl radical, octyl radicals, such as the n-octyl radical and isooctyl radicals, such as the 2,2,4-trimethylpentyl radical, nonyl radicals, such as the n-nonyl radicals, decyl radicals, such as the n-decyl radical, dodecyl radicals, such as the n-dodecyl radical, and octadecyl radicals, such as the n-octadecyl radical; alkenyl radicals such as the vinyl and ally radical; cycloalkyl radicals, such as the cyclopentyl, cyclohexyl, cycloheptyl and methylcyclohexyl radicals; aryl radicals, such as the phenyl, naphthyl, anthryl and phenanthryl radical; alkaryl radicals, such as the o-, m- and p-tolyl radicals, xylyl radicals and ethylphenyl radicals; and aralkyl radicals such as the benzyl radical and the α- and the β-phenylethyl radical. Most preferred is the methyl radical.

According to a preferred aspect of the invention the amino radical (A) in formula (I) of the modified silicone antifoam fluid is preferably selected from -(CH₂)₃NH₂; - (CH₂)₃NH(CH₂)₂NH₂; -(CH₂)₃NHC₆H₁₁; -(CH₂)₃NH(CH₂)₂NHC₆H₁₁; -(CH(CH₃)CH₂CH₂)NH₂; -(CH(CH₃)CH₂CH₂)NH(CH₂)NH₂; -(CH₂)NH₂; -(CH₂)NH(CH₂)₂NH₂;-(CH(CH₃)CH₂CH₂)NHC₆H₁₁; -(CH(CH₃)CH₂CH₂)NH(CH₂)NHC₆H₁₁; -(CH₂)NHC₆H₁₁; -(CH₂)NH(CH₂)₂NHC₆H₁₁; its protonated amino forms and/ or acylated amino forms of the above said amino radicals, and most preferably selected from -(CH₂)₃NH₂ and -(CH₂)₃NH(CH₂)₂NH₂.

According to another preferred aspect of the invention there the amine number of said modified silicone antifoam fluid of formula (I) to optimise the antifoaming nature of the said fluid in the rinsing stage comprises an amino number of from 0.6 mg of KOH/g of polymer to 2.0 mg of KOH/g of polymer of the silicone fluid of formula (I) and most preferably comprises an amine number of from 1.0 to 1.5.

According to yet another preferred aspect of the invention the polyoxyalkylene group **G** in formula (I) of the modified silicone antifoam fluid is preferably selected from -(CH₂)₃-(OC₂H₄)_{y}-O-R⁶; -(CH(CH₃)CH₂CH₂)-(OC₂H₄)_{y}-O-R⁶; -(CH₂)₃-(OC₃H₆)_{y}-O-R⁶; - (CH(CH₃)CH₂CH₂)-(OC₃H₆)_{y}-O-R⁶; -CH₂-(OC₂H₄)_{y}-O-R⁶; -CH₂-(OC₂H₄)_{y}-O-R⁶; -CH₂-(OC₃H₆)_{y}-O-R⁶ and -CH₂-(OC₃H₆)_{y}-O-R⁶, and the polyoxyalkylene group G is most preferably -(CH₂)₃-(OC₂H₄)_{y}-O-R⁶, where R⁶ and y have the meanings above. The antifoam powder can be used in laundry detergent composition for machine or hand washing in powder form comprising:
(A) an antifoam powder in an amount of 0.3 to 2.5 % by weight relating to the total amount of the laundry detergent composition comprising of (1) 10 to 35 % by weight of the modified amino silicone antifoam fluid of formula (I) and (2) 65 to 90 % by weight of a carrier filler selected from the group consisting of sodium carbonate, sodium sulphate, aluminium silicate, potassium carbonate, potassium sulphate, sodium bicarbonate, potassium bicarbonate and zeolite; and
(B) a usual laundry detergent formulation for machine or hand washing.

In still another aspect of the invention there is provided a process for preparing the antifoam silicone fluid comprising:
(I) reacting in a first step
   (a) an **α**, **ω**-dihydrogen-diorganopolysiloxane of the formula

      HR₂SiO-(R₂SiO)ₚ-SiR₂H,

      and most preferably H(CH₃)₂SiO-((CH₃)₂SiO)ₚ-Si(CH₃)₂H,
      with
   (b) a polyoxyalkylene compound of the formula

      R^{4'}-(O-R⁵)_{y}-O-R⁶,

      and most preferably CH₂=CH-CH₂-(OC₂H₄)_{y}-O-H, in the presence of
   (c) a hydrosilylation catalyst, preferably a platinum catalyst,
   (d) optionally reaction is carried out under moisture free nitrogen atmosphere, preferably at 60 to 120°C, preferably with proper cooling system to control temperature due to exothermic reaction, most preferably reaction is carried out at 80 to 100°C,
(II) reacting in a second step
   (e) the resulting hydrosilylation product obtained from step (I) of the formula

      XR₂SiO-(R₂SiO)ₚ-SiR₂X,

      and most preferably H-O-(C₂H₄O)_{y}-(CH₂)₃-Si(CH₃)₂O-((CH₃)₂SiO)ₚ-(CH₃)₂Si-(CH₂)₃-(OC₂H₄)_{y}-O-H,
      and
   (f) a diorganopolysiloxane of the formula

      HOR₂SiO-(R₂SiO)ₛ-SiR2OH,

      and most preferably HO-(CH₃)₂SiO-((CH₃)₂SiO)ₛ-(CH₃)₂Si-OH,
      with
   (g) an aminoalkyl silane of the formula

      ASiR(OR⁷)₂,

      and most preferably (CH₃O)₂Si(CH₃-(CH₂)₃-NH(C₂H₄)NH₂,
      in the presence of
   (h) a basic catalyst, preferably potassium methoxide or potassium ethoxide,
      and in the presence of
   (i) a chain-terminating organopolysiloxane of the formula

      R₃SiO-(R₂SiO)₂-SiR₃,
   and most preferably (CH₃)₃SiO-((CH₃)₂SiO)_{z}-Si(CH₃)₃,
   at a temperature of from 80 °C to 150 °C,
   and then, after the reaction (II)
(III) neutralizing the basic catalyst (h),
   by addition of a neutralizing agent (j), preferably a triorganosilyl phosphate, more preferably a trimethylsilyl phosphate, where A, X, R, R⁵, R⁶, and y have the meanings above and
   - R^{4'}: is a C₁-C₁₀-alkenyl radical having a terminal carbon-carbon double bond,
   - R⁷: is a C₁-C₄-alkyl radical,
   - p: is an integer from 10 to 25,
   - s: is an integer from 20 to 60,
   - z: is an integer from 0 to 10.
   The step (III) is preferably followed by step
(IV) stripping for removing the volatiles under vacuum with temperature between 130 to 200°C and obtaining the said antifoam silicone fluid therefrom.

In Step (I) there are used preferably 40 to 70 mol %, more preferably 50 to 70 mol %, of the α, ω-dihydrogen-diorganopolysiloxane (a) of the formula HR₂SiO-(R₂SiO)ₚ-SiR₂H and 30 to 60 mol %, more preferably 30 to 50 mol %, of the polyoxyalkylen compound (b) of the formula R^{4'}-(O-R⁵)_{y}-O-R⁶ wherein R, R^{4'}, R⁵, R⁶, p and y have the meanings above and wherein the sum of (a) and (b) is 100 mol%.

In Step (II) there are used preferably 2 to 15 parts per weight of the resulting hydrosilylation product (e) obtained from step (I) of the formula XR₂SiO-(R₂SiO)ₚ-SiR₂X,
60 to 90 parts per weight of the diorganopolysiloxane (f) of the formula HOR₂SiO-(R₂SiO)ₛ-SiR₂OH,
8 to 20 parts per weight of the aminoalkyl silane (g) of the formula ASiR(OR⁷)₂, 0.01 to 2.0 parts per weight of the basic catalyst (h) and 0,1 to 5 parts per weight of the chain-terminating organopolysiloxane (j) of the formula R₃SiO-(R₂SiO)_{z-}SiR₃, wherein R, R⁷, A, X, p, s and z have the meanings above.

The amino radicals A in formula (I) can be protonated partially or fully by adding acids to the modified amino silicone antifoam fluid wherein the salt forms of the amino radicals are obtained.

Examples of acids are carboxylic acids with 3 to 18 carbon atoms which can be linear or branched, such as formic acid, acetic acid, propionic acid, butyric acid, pivalic acid, sorbic acid, benzoic acid, salicylic acid.

The acids are preferably used in amounts of from 0.1 to 2.0 mol per 1 mol of amino radical A in the silicone antifoam fluid of formula (I).

Protonated amino radicals **A'** of the formula

-R¹-[NR²-R³-]ₓNH⁺R²₂ Z⁻ or -R¹- [NH⁺R²-R³-]ₓNH⁺R²₂ (x+1) Z⁻

where Z⁻ is an anion, preferably an anion of a corresponding acid, such as a carboxylate anion, for example an acetate anion, to the N⁺,
and R¹, R², R³ and x have the meanings above, can be obtained.

As discussed hereinbefore the present invention relates to an antifoam powder involving delay antifoam composition, and in particular, relates to the preparation of the said antifoam powder comprising modified anti foam amino silicone/ organopolysiloxane fluid absorbed in carrier filler, which can be used in laundry detergent formulation specially in fabric wash adapted for excellent antifoaming effect in rinsing cycle while maintaining almost similar foaming nature compare to 'detergent without antifoam' in washing cycles.

Advantageously, the said detergent composition involving the delay antifoam composition is found to have excellent antifoaming effect in rinsing cycle while preferred foaming effect in washing cycle.

The present invention also relates to a process of synthesis of the said modified amino silicone / organopolysiloxane based delay antifoam compound present in the said antifoam powder for use in detergent formulation wherein the said silicone compound generates preferred in-situ foaming properties of the said detergent formulation in washing cycle but acts as antifoam in rinsing cycle.

According to the present invention, performance of powder silicone antifoam comprising modified silicone fluid/ organopolysiloxane is confirmed by a unique mechanism that governs its role as an antifoam agent in rinsing cycles while maintaining preferred amount of foam in washing cycles.

Effective detergent compositions comprise anionic surfactants, particularly alkyl benzene sulfonate and alkyl sulfate surfactants. It has also been found beneficial for the appearance and cleaning of fabrics for laundry detergents to contain an amount of a cellulose enzyme sufficient to improve the appearance and cleaning of such fabrics, particularly after multiple cleaning cycles. But this anionic surfactant is important for cleaning and cheap source of generating substantial foam in the washing even at small amount. To improve upon the detergent effect of the laundry detergent formulation, different other chemicals are used like complex phosphates, non-ionic surfactants, soap noodles, different inorganic salts and other additive those used for optimizing detergency effect.

In detergent powder, main foaming component is anionic surfactant. According to the present invention, when laundry detergent containing powder silicone antifoam is dissolved in water, huge amount of foam generates due to anionic surfactant and no interaction takes place between amino group of modified silicone fluid and anionic surfactant due to the presence of high foam in the liquor. As soon as, the washing fabric come across the said liquor in the washing cycle, modified amino silicone fluid penetrates inside the fiber due to its high affinity towards the fabric but due to high lather during washing cycle in machine wash or during rubbing the fabrics in hand wash after soaking with amino silicone fluid penetrated into the said fabric, the anionic surfactant can't come towards the amino group of modified silicone to interact and form salt. Therefore, foaming nature of the detergent during prewash or in post wash does not change. In rinsing cycle, residual detergent transfers into fresh water from the fabric after squeezing the fabrics. Therefore, rinsing liquor foam density reduces significantly due to less amount of detergent present in the liquor and hence, anionic surfactant easily reacts with modified amino silicone penetrated and attached to the fabric due to less foam in liquor to form water soluble silicone salt that transfers immediately to rinsing liquor due to the formation of a neutral salt with anionic surfactant. As a result, anionic surfactant thus transformed to a salt of silicone and anionic surfactant thereby loses its foaming nature and hence, foams in rinsing lather are eliminated in significant amounts. Specially, in case of hand wash, no foam is observed after 1 to 2 rinsing.

It is thus observed according to the present invention, antifoam powder when used in laundry detergent composition not only saves water in rinsing cycles but also provides for good conditioning effects on the fabric due to residual silicone adhered onto the fabric.

It is observed according to the present invention, modified amino silicone/ organopolysiloxane fluid directly incorporated in the liquid laundry detergent for the purpose of saving water in rinsing cycles during fabric washing by hand or by machine wash is also similar to the laundry powder detergents containing the said novel powder based antifoam agent similarly serving the purpose of saving water.

According to the present invention that novel modified amino silicone or organopolysiloxane fluid /powder can be used in personal care i.e. more particularly in hair care application for conserving water during the hair rinsing.

It is also a fact according to the present invention that the modified amino silicone or organopolysiloxane in powder or fluid form can be used in personal care i.e. more particularly in hair care applications and body wash for conserving water during the hair/body washing.

It is another possibility according to the present invention that the modified amino silicone or organopolysiloxane in powder or fluid form can be used in different home care applications like floor cleaner, wash room cleaners besides home laundry and industrial laundry applications especially for the conservation of water

It is also made clear according to the present invention that modified amino silicone or organopolysiloxane in powder or fluid form can be used in defoamers or antifoam agents in textile processing or textile treatments/ pulp and paper papers and other industrial applications where foaming due to anionic substances.

The details of the invention, its nature and objects are explained hereunder in greater detail in relation to the following non-limiting examples.

### EXAMPLES

### Step -I

**Detergent Formulation for hand wash: Example without antifoam powder**

| | |
|---|---|
| Linear Alkyl benzene sulfonate Salt | = 14.00 part |
| Sodium tripolyphosphate | = 26.40 part |
| Soda Ash | = 47.55 part |
| Sodium Sulphate | = 4.40 part |
| Sodium Perborate | = 6.85 part |
| Tetra Acetyl Ethylene Diamine | = 0.5 part |
| Perfume | = 0.30 part |

### Example-1

### Step -II : Polymer Synthesis

In the 10 litre reactor, transferred 5648 g 80 mPa.s α, ω hydroxyl terminated polydimethylsiloxane, 250 g α, ω polyethyl glycol 10 EO terminated via propylene spacing polydimethylsilicone having polymer MW approx 1800 having 38 mole % polyoxyethylene groups G and 782 g gamma amino ethyl amino propyl methyl dimethoxy silane. Closed the reactor and purged with nitrogen for 30 min. Reactor was equipped with stirring, heating/cooling having vertical condenser that could use for stripping as well refluxing. Receiver was connected at the bottom of the condenser. Reactor also had a facility to work under nitrogen atmosphere or under vacuum or under pressure. An accurate temperature controlling system also installed in the reactor so that reaction could be carried out at desire temperature. After 30 min nitrogen purging, increased the reactor material temperature to 130°C under nitrogen purging. Added 1 g 40% active alcoholic KOH solution and reaction was carried out for 1 hr. Repeat the same catalyst addition twice and every time reaction was carried out 1 hr. Then added 40 g trimethylsiloxy terminated dimethyl polysiloxane having viscosity 10 mPa.s and reaction was continued for 2 hr. Again added 2 g KOH solution and continued reaction for another 2 hr. neutralized the fluid with 5.0 g Silyl Phosphate. Stopped nitrogen purging and distillation was carried out under 300 to 500 mm Hg vacuum at 150°C for removing all volatiles.

Cooled the fluid to room temperature under vacuum after completion of distillation. A clear α,ω-glycol terminated amino polydimethyl siloxane was obtained having viscosity 1000 mPa.s at 25°C and amine no 1.24 and having 3.3 mol % polyoxyethylene groups G. On average 50 mol% of the radical X, i.e. the terminal groups of the amino polydimethyl siloxane according to formula (I), are polyoxyethylene groups G and 50 mol% of the radical X are radicals R = methyl radicals.

### Step -III: Antifoam Compound Formulation

Equipment used: 10 litre volume, Stainless steel plough shear mixer, with one side entry high speed dispersing tool, suitability jacketed for nominal pressure hot-water/cold water, heating and cooling. All shaft glands N2 purged. Suitable dust separator installed at loading hopper and standard bottom drain provision.
1. Take 3.5 kg of commercial grade Sodium Carbonate powder having particle size 125 micron into above mixer.
2. Stir and heat to 130°C under N₂ purge to dry the powder.
3. After the drying powder for about an hour, start adding Amino Silicone Fluid (capped with PEG-dimethyl siloxy group having amine no 1.24 and viscosity 1000 mPa.s), by metering pump. Ensure dispensing is uniform into the stirred mass.
4. Addition of 1.5 kg of above fluid is done in about 3 hour, while temperature is maintained at 130°C.
5. Continue mixing for another 1 hr after fluid addition.
6. Cool the powder to 40°C before draining.

**Step - IV: Detergent Formulation for hand wash: Example with antifoam powder**

| | |
|---|---|
| Linear Alkyl benzene sulfonate Salt | = 14.00 part |
| Sodium tripolyphosphate | = 26.40 part |
| Soda Ash | = 47.05 part |
| Sodium Sulphate | = 4.40 part |
| Sodium Perborate | = 6.85 part |
| Tetra Acetyl Ethylene Diamine | = 0.5 part |
| Perfume | = 0.30 part |
| Antifoam powder (produced in step III) | = 0.5 part |

**Step -V: Detergent Formulation for machine wash: Example without antifoam powder of the invention**

| | |
|---|---|
| Linear Alkyl benzene sulfonate Salt | = 10.00 part |
| Soap | = 1.25 part |
| Lauryl alcohol 7 EO | = 2.00 part |
| Sodium tripolyphosphate | = 26.40 part |
| Soda Ash | = 47.9 part |
| Sodium Sulphate | = 4.40 part |
| Enzyme Protease | = 0.40 part |
| Sodium Perborate | = 6.85 part |
| Tetra Acetyl Ethylene Diamine | = 0.5 part |
| Perfume | = 0.30part |

**Step -VI: Detergent Formulation for machine wash: Example with antifoam powder of the invention**

| | |
|---|---|
| Linear Alkyl benzene sulfonate Salt | = 10.00 part |
| Soap | = 1.25 part |
| Lauryl alcohol 7 EO | = 2.00 part |
| Sodium tripolyphosphate | = 26.40 part |
| Soda Ash | = 47.40 part |
| Sodium Sulphate | = 4.40 part |
| Enzyme Protease | = 0.40 part |
| Sodium Perborate | = 6.85 part |
| Tetra Acetyl Ethylene Diamine | = 0.5 part |
| Perfume | = 0.30part |
| Antifoam powder (produced in step III) | = 0.5 part |

### Step VII: Performance Evaluation (hand wash)

Protocol used for the evaluation of detergent in bucket by hand washing was as below
a. used 24°fH hard water
b. fabric to liquor ratio was 1:10
c. used 4 gpl detergent (gpl = grams per liter)
d. lathering was done for 20 sec and immerged the fabrics in bucket water.
e. washing cycle maintained 15 min or 30 min and measured lather height in every 5 min or 10 min intervals.
f. squeezed fabrics at 50% weight pick up
g. rinsing was done in each case in fresh 24°fH hard water in ratio of rinse water 1 part and 7part fresh water and then 5 see whisking; squeezed fabrics at 50% weight pick up and measured the foam height in bucket.

### Step VIII: Performance Evaluation (Machine wash)

Protocol used for the evaluation of detergent in top load automatic machine
a. used 24°fH hard water
b. fabric to liquor ratio was 1:10
c. used 4 gpl detergent (gpl = grams per liter)
d. washing cycle maintained 15 min or 30 min. Open the top lid of washing machine just before discharged the washing liquor(as soon as top lid opened, m/c stopped in operation automatically) and took out fabrics by squeezing so that fabric retained 50% wash liquor. After taking out the fabric, measure the foam height.
e. Closed the top lid and ran machine. As soon as machine discharged the washing liquor, opened top lid of the machine and transferred the fabrics in the machine. Closed the top lid of machine and immediately machine was in operation for rinsing cycle. Open the top lid of washing machine just before discharged the 1^{st} rinsing liquor. Took out fabrics by squeezing so that fabrics were 50% washed liquor. After taking out the fabric, measure the foam height and noted as 1^{st} rinsing foam height.
f. Closed the top lid and followed step 'f' for foam height measurement of 2^{nd}, 3^{rd} & 4^{th} rinsing.

**Table -I : Hand washing result**

| Sample's name | detergent dosage, gpl | washing time, min | foam height during washing, cm | | | | Foam height after 1^{st} rinse, cm | Foam height after 2^{nd} rinse, cm | Foam height after 3^{rd} rinse, cm | Foam height after 4^{th} rinse, cm |
|---|---|---|---|---|---|---|---|---|---|---|
| | | | 0 min | 10 min | 20 min | 30 min | | | | |
| Detergent Step I | 4 | 30 | 10.5 | 10.5 | 10 | 9 | 2 | 1.5 | 1 | 0.5 |
| Detergent Step -IV | 4 | 30 | 12 | 10 | 10 | 9 | 0.5 | 0 | - | - |

**Table II Machine Wash result**

| Sample's name | detergent dosage, gpl | washing time, min | foam height after 30 min washing in cm | Foam height after 1^{st} rinse, cm | Foam height after 2^{nd} rinse, cm | Foam height after 3^{rd} rinse, cm | Foam height after 4^{th} rinse, cm |
|---|---|---|---|---|---|---|---|
| Detergent Step - V | 4 | 30 | 11 | 2 | 1.6 | 1.0 | 0.8 |
| Detergent Step - VI | 4 | 30 | 11.5 | 0.8 | 0.2 | 0 | - |

Above Table I and II shows the application result of the detergent produced in step IV of experiment in step II clearly directs to the fact that detergent IV containing 0.5% of the delay antifoam compound of the present invention performed extremely well in comparison to conventional Detergent in step I in rinsing cycle and in washing cycle, where there was comparable preferred foam height in detergent of step IV and detergent made in step I.

From Table I and II, it is also clear that delay antifoam powder produced in the experiment showed preferred foaming natures in washing cycle and at dilution stage of rinsing, due to less foam, anionic surfactant penetrates faster in the fabric and reacted with amino group of the silicone in fabric. Therefore, anionic surfactant loses the foaming character and passes on to the aqueous phase. On the other hand, in the washing cycle, anionic surfactant cannot penetrate enough due to high foam to attach itself to the amino of silicone polymer and therefore no difference in foam is observed during washing cycle either in hand wash or in machine wash. Similar result from machine wash is also observed in table II when detergents are used from those made in steps V and VI.

Therefore, according to the present invention, modification of silicone molecule and use of such modified molecules such as the modified amino silicone/ organopolysiloxane in detergent formulation is acceptable to all users globally with a consideration of different washing habit from one person to another person, from one region to another region, from one country to another country. Again, we observed from experiment, newly developed delay antifoam powder according to present invention worked at 0.5% dosage which obviously does not put much impact on the cost of detergent formulation that most importantly helps detergent manufacturer to pass-on the benefits towards whole detergent consumers without increasing the product cost.

It is thus possible by way of the present invention to provide for detergent formulations and the like to favour both washing and rinsing cycles and make washing of clothes/fabrics more convenient and user friendly apart from taking care of avoiding unnecessary wastage of valuable water and saving the environment from unnecessarily wastage of water in hand wash and/or machine washing and the like.

## Claims

1. An antifoam powder comprising
(1) 10 to 35 % by weight of a modified amino silicone antifoam fluid of the formula
**X**R₂Si(OSi**A**R)ₙ(OSiR₂)ₘOSiR₂**X** (I)
where
A is an amino radical of the formula -R¹-[NR²-R³-]ₓNR²₂ or an amino radical of the formula selected from the group - (CH₂)₃NHC₆H₁₁, - (CH₂)₃NH(CH₂)₂NHC₆H₁₁, - (CH(CH₃)CH₂CH₂)NHC₆H₁₁, - (CH(CH₃)CH₂CH₂)NH(CH₂)NHC₆H₁₁, - (CH₂)NHC₆H₁₁ and - (CH₂)NH(CH₂)₂NHC₆H₁₁, or the protonated amino forms of the amino radical A and/or acylated amino forms of the above said amino radicals, X is R or a polyoxyalkylene group G of the formula -R⁴-(O-R⁵)_{y}-O-R⁶
**R** is a monovalent hydrocarbon radical having from 1 to 18 carbon atoms,
**R¹** is a C₁₋C₁₀-alkylene radical, preferably a radical of the formula -CH₂CH₂CH₂-,
**R²** is a hydrogen atom or a C₁-C₄-alkyl radical, preferably a hydrogen atom,
**R³** is a C₁-C₁₀-alkylene radical, preferably a radical of the formula -CH₂CH₂-,
**R**⁴ is a C₁-C₁₀-alkylene radical, preferably a radical of the formula -CH₂CH₂CH₂-,
**R**⁵ is a C₁-C₄-alkylene radical, preferably a radical of the formula -CH₂CH₂- or -CH₂CH₂(CH₃))- or mixtures of them,
**R**⁶ is a hydrogen atom or an C₁-C₄-alkyl radical, preferably a hydrogen atom or a methyl radical, more preferably a hydrogen atom,
**n** is an integer from 1 to 6, preferably from 1 to 3,
**m** is an integer from 1 to 200, preferably from 1 to 80,
**x** is 0 or 1 and
**y** is an integer from 5 to 20, preferably from 5 to 12,
with the provision that on average from 30 to 60 mol%, preferably 50 mol%, of radicals X are polyoxyalkylene groups G; and
(2) 65 to 90 % by weight of a carrier filler selected from the group comprising of sodium carbonate, sodium sulphate, aluminium silicate, potassium carbonate, potassium sulphate, sodium bicarbonate, potassium bicarbonate and zeolite.

2. An antifoam powder as claimed in claim 1 wherein the amino radical (A) is preferably selected from -(CH₂)₃NH₂;
- (CH₂)₃NH(CH₂)₂NH₂;
- (CH₂)₃NHC₆H_{11;} - (CH₂)₃NH(CH₂)₂NHC₆H₁₁; -(CH(CH₃)CH₂CH₂)NH₂; - (CH(CH₃)CH₂CH₂)NH(CH₂)NH₂; -(CH₂)NH₂; -(CH₂)NH(CH₂)₂NH₂; - (CH(CH₃)CH₂CH₂)NHC₆H₁₁; - (CH(CH₃)CH₂CH₂)NH(CH₂)NHC₆H₁₁; - (CH₂)NHC₆H_{11;} -(CH₂)NH(CH₂)₂NHC₆H₁₁, its protonated amino forms and/or acylated amino forms of the above said amino radicals, and most preferably selected from -(CH₂)₃NH₂ and - (CH₂)₃NH(CH₂)₂NH₂.

3. An antifoam powder as claimed in claim 1 or 2 wherein the amine number of said modified silicone antifoam fluid of formula (I) to optimise the antifoaming nature of the said fluid in the rinsing stage comprises an amine number of from 0.6 mg of KOH/g of polymer to 2.0 mg of KOH/ g of polymer of the silicone fluid of formula (I) and most preferably comprises an amine number of from 1.0 to 1.5.

4. An antifoam powder as claimed in claim 1 or 2 wherein in said Formula (I) the polyoxyalkylen radical G is selected from -(CH₂)₃-(OC₂H₄)_{y}-O-R₆; -(CH(CH₃)CH₂CH₂)-(OC₂H₄)_{y}-O-R⁶; - (CH₂)₃-(OC₃H₆)_{y}-O-R⁶; -(CH(CH₃)CH₂CH₂)-(OC₃H₆)_{y}-O-R⁶; - (CH₂)-(OC₂H₄)_{y}-O-R⁶; -CH₂-(OC₂H₄)_{y}-O-R⁶; -(CH₂)-(OC₃H₆)y-O-R⁶ and -CH₂-(OC₃H₆)y-O-R⁶, and the polyoxyalkylen radical G is preferably -(CH₂)₃-(OC₂H₄)_{y}-O-R⁶ where **R**⁶ is a hydrogen atom or an C₁-C₄-alkyl radical, preferably a hydrogen atom or a methyl radical, more preferably a hydrogen atom, and y is an integer from 5 to 20, preferably from 5 to 12.

5. Process for preparing the antifoam powder as claimed in claim 1 or 2 comprising the steps of
(i) stirring and drying the carrier filler at a temperature from 100°C to 150°C,
(ii) mixing the dried carrier filler with the modified amino silicone antifoam fluid of Formula (I) at a temperature from 100°C to 150°C and
(iii)cooling and obtaining therefrom the said antifoam powder.

6. An antifoam silicone fluid adapted for use in fluid/ powder based detergent formulations of the formula
**X**R₂Si(OSi**A**R)ₙ(OSiR₂)ₘOSiR₂**X** (I)
where
**A** is an amino radical of the formula -R¹-[NR²-R³-]ₓNR²₂ or an amino radical of the formula selected from the group - (CH₂)₃NHC₆H₁₁, - (CH₂)₃NH(CH₂)₂NHC₆H₁₁, - (CH(CH₃)CH₂CH₂)NHC₆H₁₁, - (CH(CH₃)CH₂CH₂)NH(CH₂)NHC₆H₁₁, - (CH₂)NHC₆H₁₁ and - (CH₂)NH(CH₂)₂NHC₆H₁₁, or the protonated amino forms of the amino radical A and/or acylated amino forms of the above said amino radicals, X is **R** or a polyoxyalkylene group **G** of the formula -R⁴-(O-R⁵)_{y}-O-R⁶
**R** is a monovalent hydrocarbon radical having from 1 to 18 carbon atoms,
**R¹** is a C₁-C₁₀-alkylene radical, preferably a radical of the formula -CH₂CH₂CH₂-,
**R**² is a hydrogen atom or a C₁-C₄-alkyl radical, preferably a hydrogen atom,
**R³** is a C₁-C₁₀-alkylene radical, preferably a radical of the formula -CH₂CH₂-,
**R**⁴ is a C₁-C₁₀-alkylene radical, preferably a radical of the formula -CH₂CH₂CH₂-,
**R**⁵ is a C₁-C₄-alkylene radical, preferably a radical of the formula -CH₂CH₂- or -CH₂CH₂(CH₃)- or mixtures of them,
**R**⁶ is a hydrogen atom or an C₁-C₄-alkyl radical, preferably a hydrogen atom or a methyl radical, more preferably a hydrogen atom,
**n** is an integer from 1 to 6, preferably from 1 to 3,
**m** is an integer from 1 to 200, preferably from 1 to 80,
**x** is 0 or 1 and
**y** is an integer from 5 to 20, preferably from 5 to 12,
with the provision that on average from 30 to 60 mol%, preferably 50 mol%, of radicals **X** are polyoxyalkylene groups G.

7. An antifoam silicone fluid as claimed in claim 6 wherein the amino radical (A) is preferably selected from -(CH₂)₃NH₂; -(CH₂)₃NH(CH₂)₂NH₂; -(CH₂)₃NHC₆H₁₁; -(CH₂)₃NH(CH₂)₂NHC₆H₁₁; -(CH(CH₃)CH₂CH₂)NH₂; -(CH(CH₃)CH₂CH₂)NH(CH₂)NH₂ ; -(CH₂)NH₂; -(CH₂)NH(CH₂)₂NH₂; -(CH(CH₃)CH₂CH₂)NHC₆H₁₁; - (CH(CH₃)CH₂CH₂)NH(CH₂)NHC₆H₁₁; -(CH₂)NHC₆H₁₁; -(CH₂)NH(CH₂)₂NHC₆H₁₁, its protonated amino forms and/or acylated amino forms of the above said amino radicals, and most preferably selected from -(CH₂)₃NH₂ and -(CH₂)₃NH(CH₂)₂NH₂.

8. An antifoam silicone fluid as claimed in claim 6 or 7
wherein the amine number of said modified silicone antifoam fluid of formula (I) to optimise the antifoaming nature of the said fluid in the rinsing stage comprises an amine number of from 0.6 mg of KOH/g of polymer to 2.0 mg of KOH/g of polymer of the silicone fluid of formula (I) and most preferably comprises an amine number of from 1.0 to 1.5.

9. An antifoam silicone fluid as claimed in claim 6 or 7
wherein in said formula (I) the polyoxyalkylen radical G is selected from - (CH₂)₃-(OC₂H₄)_{y}-O-R⁶; -(CH(CH₃)CH₂CH₂)-(OC₂H₄)_{y}-O-R⁶; - (-CH₂)₃-(OC₃H₆)_{y}-O-R⁶; - (CH(CH₃)CH₂CH₂)-(OC₃H₆)_{y}-O-R⁶; -(CH₂)-(OC₂H₄)_{y}-O-R⁶; -CH₂-(OC₂H₄)_{y}-O-R⁶; -(CH₂)-(OC₃H₆)_{y}-O-R⁶ and -CH₂-(OC₃H₆)_{y}-O-R⁶, and the polyoxyalkylen radical G is preferably -(CH₂)₃-(OC₂H₄)_{y}-O-R⁶, wherein R⁶ is a hydrogen atom or an C₁-C₄-alkyl radical, preferably a hydrogen atom or a methyl radical, more preferably a hydrogen atom, and y is an integer from 5 to 20, preferably from 5 to 12.

10. Process for preparing the antifoam silicone fluid as claimed in claim 6 or 7 comprising
(I) reacting in a first step
(a) an α,ω-dihydrogen-diorganopolysiloxane of the formula
HR₂SiO-(R₂SiO)ₚ-SiR₂H,
and most preferably H(CH₃)₂SiO-((CH₃)₂SiO)ₚ-Si(CH₃)₂H,
with
(b) a polyoxyalkylene compound of the formula
R^{4'}-(O-R⁵)_{y}-O-R⁶,
and most preferably CH₂=CH-CH₂-(OC₂H₄)_{y}-O-H,
in the presence of
(c) a hydrosilylation catalyst, preferably a platinum catalyst,
(d) optionally reaction is carried out under moisture free nitrogen atmosphere, preferably at 60 to 120°C, preferably with proper cooling system to control temperature due to exothermic reaction, most preferably reaction is carried out at 80 to 100°C,
(II) reacting in a second step
(e) the resulting hydrosilylation product obtained from step (I) of the formula
XR₂SiO-(R₂SiO)ₚ-SiR₂X,
and most preferably H-O- (C₂H₄O)_{y}-(CH₂)₃-Si(CH₃)₂O-((CH₃)₂SiO)ₚ-(CH₃)₂Si-(CH₂)₃-(OC₂H₄)_{y}-O-H,
and
(f) a diorganopolysiloxane of the formula
HOR₂SiO-(R₂SiO)ₛ-SiR₂OH,
and most preferably HO-(CH₃)₂SiO-((CH₃)₂SiO)ₛ-(CH₃)₂Si-OH,
with
(g) an aminoalkyl silane of the formula
ASiR(OR⁷)₂,
and most preferably (CH₃O)₂Si(CH₃)-(CH₂)₃-NH(C₂H₄)NH₂,
in the presence of
(h) a basic catalyst, preferably potassium methoxide or potassium ethoxide,
and in the presence of
(i) a chain-terminating organopolysiloxane of the formula
R₃SiO-(R₂SiO)_{z}-SiR₃,
and most preferably (CH₃)₃SiO-((CH₃)₂SiO)_{z}-Si(CH₃)₃,
at a temperature of from 80 °C to 150 °C,
and then, after the reaction (II)
(III) neutralizing the basic catalyst (h),
by addition of a neutralizing agent (j), preferably a triorganosilyl phosphate, more preferably a trimethylsilyl phosphate,
where A, X, R, R⁵, R⁶ and y have the meanings mentioned in claim 6 and
R^{4'} is a C₁-C₁₀-alkenyl radical having a terminal carbon-carbon double bond,
R⁷ is a C₁-C₄-alkyl radical,
p is an integer from 10 to 25,
s is an integer from 20 to 60 and
z is an integer from 0 to 10.

## Patentansprüche

1. Antischaumpulver, umfassend
(1) 10 bis 35 Gew.-% eines modifizierten Aminosilikon-Antischaumfluids der Formel XR₂Si(OSiAR)ₙ(OSiR₂)ₘOSiR₂X (I) wobei
A für einen Aminorest der Formel -R¹-[NR²-R³-]ₓNR²₂ oder einen Aminorest der Formel aus der Gruppe - (CH₂)₃NHC₆H₁₁; - (CH₂)₃NH(CH₂)₂NHC₆H₁₁; - (CH(CH₃)CH₂CH₂)NHC₆H₁₁; - (CH(CH₃)CH₂CH₂)NH(CH₂)NHC₆H₁₁; - (CH₂)NHC₆H₁₁ und - (CH₂)NH(CH₂)₂NHC₆H₁₁ oder die protonierten Aminoformen des Aminorests A und/oder acylierte Aminoformen der obigen Aminoreste steht,
X für R oder eine Polyoxyalkylengruppe G der Formel -R⁴-(O-R⁵)_{y}-O-R⁶ steht,
R für einen einwertigen Kohlenwasserstoffrest mit 1 bis 18 Kohlenstoffatomen steht,
R¹ für einen C₁-C₁₀-Alkylenrest, vorzugsweise einen Rest der Formel -CH₂CH₂CH₂-, steht,
R² für ein Wasserstoffatom oder einen C₁-C₄-Alkylrest, vorzugsweise ein Wasserstoffatom, steht,
R³ für einen C₁-C₁₀-Alkylenrest, vorzugsweise einen Rest der Formel -CH₂CH₂-, steht,
R⁴ für einen C₁-C₁₀-Alkylenrest, vorzugsweise einen Rest der Formel -CH₂CH₂CH₂-, steht,
R⁵ für einen C₁-C₄-Alkylenrest, vorzugsweise einen Rest der Formel -CH₂CH₂- oder -CH₂CH₂(CH₃)- oder Mischungen davon, steht,
R⁶ für ein Wasserstoffatom oder einen C₁-C₄-Alkylrest, vorzugsweise ein Wasserstoffatom oder einen Methylrest, weiter bevorzugt ein Wasserstoffatom, steht,
n für eine ganze Zahl von 1 bis 6, vorzugsweise von 1 bis 3, steht,
m für eine ganze Zahl von 1 bis 200, vorzugweise von 1 bis 80, steht,
x für 0 oder 1 steht und
y für eine ganze Zahl von 5 bis 20, vorzugweise von 5 bis 12, steht,
mit der Maßgabe, dass es sich bei durchschnittlich 30 bis 60 Mol-%, vorzugsweise 50 Mol-%, der Reste X um Polyoxyalkylengruppen G handelt; und
(2) 65 bis 90 Gew.-% eines Trägerfüllstoffs aus der Gruppe umfassend Natriumcarbonat, Natriumsulfat, Aluminiumsilikat, Kaliumcarbonat, Kaliumsulfat, Natriumhydrogencarbonat, Kaliumhydrogencarbonat und Zeolith.

2. Antischaumpulver nach Anspruch 1, wobei der Aminorest (A) vorzugsweise aus -(CH₂)₃NH₂; -(CH₂)₃NH(CH₂)₂NH₂; -(CH₂)₃NHC₆H₁₁; -(CH₂)₃NH(CH₂)₂NHC₆H₁₁; -(CH(CH₃)CH₂CH₂)NH₂; -(CH(CH₃)CH₂CH₂)NH(CH₂) NH₂; -(CH₂)NH₂; -(CH₂)NH(CH₂)₂NH2; -(CH(CH₃)CH₂CH₂)NHC₆H₁₁; -(CH(CH₃)CH₂CH₂)NH(CH₂)NHC₆H₁₁; -(CH₂)NHC₆H₁₁; -(CH₂)NH(CH₂)₂NHC₆H₁₁, dessen protonierten Aminoformen und/oder acylierten Aminoformen der obigen Aminoreste und ganz besonders bevorzugt aus -(CH₂)₃NH₂ und -(CH₂)₃NH(CH₂)₂NH₂ ausgewählt ist.

3. Antischaumpulver nach Anspruch 1 oder 2, wobei die Aminzahl des modifizierten Silikon-Antischaumfluids der Formel (I) zur Optimierung des Antischaumverhaltens des Fluids in der Spülstufe eine Aminzahl von 0,6 mg KOH/g Polymer bis 2,0 mg KOH/g Polymer des Silikonfluids der Formel (I) und ganz besonders bevorzugt eine Aminzahl von 1,0 bis 1,5 umfasst.

4. Antischaumpulver nach Anspruch 1 oder 2, wobei in der Formel (I) der Polyoxyalkylenrest G aus -(CH₂)₃-(OC₂H₄)_{y}-O-R⁶; -(CH(CH₃)CH₂CH₂)-(OC₂H₄)_{y}-O-R⁶; -(CH₂)₃-(OC₃H_{6y}-O-R⁶; -(CH(CH₃)CH₂CH₂)-(OC₃H₆)_{y}-O-R⁶; -(CH₂)-(OC₂H₄)_{y}-O-R⁶; -CH₂-(OC₂H₄)_{y}-O-R⁶; -(CH₂)-(OC₃H₆)_{y}-O-R⁶ und -CH₂-(OC₃H₆)_{y}-O-R⁶ ausgewählt ist und der Polyoxyalkylenrest G vorzugsweise -(CH₂)₃-(OC₂H₄)_{y}-O-R⁶ ist, wobei R⁶ für ein Wasserstoffatom oder einen C₁-C₄-Alkylrest, vorzugsweise ein Wasserstoffatom oder einen Methylrest, weiter bevorzugt ein Wasserstoffatom, steht und y für eine ganze Zahl von 5 bis 20, vorzugsweise von 5 bis 12, steht.

5. Verfahren zur Herstellung des Antischaumpulvers nach Anspruch 1 oder 2, das folgende Schritte umfasst:
(i) Rühren und Trocknen des Trägerfüllstoffs bei einer Temperatur von 100°C bis 150°C,
(ii) Mischen des getrockneten Trägerfüllstoffs mit dem modifizierten Aminosilikon-Antischaumfluid der Formel (I) bei einer Temperatur von 100°C bis 150°C und
(iii) Abkühlen und Erhalten des Antischaumpulvers daraus.

6. Antischaum-Silikonfluid zur Verwendung in Waschmittelformulierungen auf Fluid/Pulver-Basis der Formel
XR₂Si(OSiAR)ₙ(OSiR₂)ₘOSiR₂X (I)
wobei
A für einen Aminorest der Formel -R¹-[NR²-R³-]ₓNR²₂ oder einen Aminorest der Formel aus der Gruppe -(CH₂)₃NHC₆H₁₁; -(CH₂)₃NH(CH₂)₂NHC₆H₁₁; -(CH(CH₃)CH₂CH₂)NHC₆H₁₁; -(CH(CH₃)CH₂CH₂)NH(CH₂)NHC₆H₁₁; -(CH₂)NHC₆H₁₁ und -(CH₂)NH(CH₂)₂NHC₆H₁₁ oder die protonierten Aminoformen des Aminorests A und/oder acylierte Aminoformen der obigen Aminoreste steht, X für R oder eine Polyoxyalkylengruppe G der Formel -R⁴-(O-R⁵)_{y}-O-R⁶ steht,
R für einen einwertigen Kohlenwasserstoffrest mit 1 bis 18 Kohlenstoffatomen steht,
R¹ für einen C₁-C₁₀-Alkylenrest, vorzugsweise einen Rest der Formel -CH₂CH₂CH₂-, steht,
R² für ein Wasserstoffatom oder einen C₁-C₄-Alkylrest, vorzugsweise ein Wasserstoffatom, steht,
R³ für einen C₁-C₁₀-Alkylenrest, vorzugsweise einen Rest der Formel -CH₂CH₂-, steht,
R⁴ für einen C₁-C₁₀-Alkylenrest, vorzugsweise einen Rest der Formel -CH₂CH₂CH₂-, steht,
R⁵ für einen C₁-C₄-Alkylenrest, vorzugsweise einen Rest der Formel -CH₂CH₂- oder -CH₂CH₂(CH₃)- oder Mischungen davon, steht,
R⁶ für ein Wasserstoffatom oder einen C₁-C₄-Alkylrest, vorzugsweise ein Wasserstoffatom oder einen Methylrest, weiter bevorzugt ein Wasserstoffatom, steht,
n für eine ganze Zahl von 1 bis 6, vorzugsweise von 1 bis 3, steht,
m für eine ganze Zahl von 1 bis 200, vorzugweise von 1 bis 80, steht,
x für 0 oder 1 steht und
y für eine ganze Zahl von 5 bis 20, vorzugweise von 5 bis 12, steht,
mit der Maßgabe, dass es sich bei durchschnittlich 30 bis 60 Mol-%, vorzugsweise 50 Mol-%, der Reste X um Polyoxyalkylengruppen G handelt.

7. Antischaum-Silikonfluid nach Anspruch 6, wobei der Aminorest (A) vorzugsweise aus -(CH₂)₃NH₂; -(CH₂)₃NH(CH₂)₂NH₂; -(CH₂)₃NHC₆H₁₁; -(CH₂)₃NH(CH₂)₂NHC₆H₁₁; -(CH(CH₃)CH₂CH₂)NH₂; -(CH(-CH₃)CH₂CH₂)NH(CH₂)NH₂; -(CH₂)NH₂; -(CH₂)NH(CH₂)₂NH2; -(CH(CH₃)CH₂CH₂)NHC₆H₁₁; -(CH(CH₃)CH₂CH₂)NH(CH₂)NHC₆H₁₁; -(CH₂)NHC₆H₁₁; -(CH₂)NH(CH₂)₂NHC₆H₁₁, dessen protonierten Aminoformen und/oder acylierten Aminoformen der obigen Aminoreste und ganz besonders bevorzugt aus -(CH₂)₃NH₂ und -(CH₂)₃NH(CH₂)₂NH₂ ausgewählt ist.

8. Antischaum-Silikonfluid nach Anspruch 6 oder 7, wobei die Aminzahl des modifizierten Silikon-Antischaumfluids der Formel (I) zur Optimierung des Antischaumverhaltens des Fluids in der Spülstufe eine Aminzahl von 0,6 mg KOH/g Polymer bis 2,0 mg KOH/g Polymer des Silikonfluids der Formel (I) und ganz besonders bevorzugt eine Aminzahl von 1,0 bis 1,5 umfasst.

9. Antischaum-Silikonfluid nach Anspruch 6 oder 7, wobei in der Formel (I) der Polyoxyalkylenrest G aus -(CH₂)₃-(OC₂H₄)_{y}-O-R⁶; -(CH(CH₃)CH₂CH₂)-(OC₂H₄)_{y}-O-R⁶; -(CH₂)₃-(OC₃H₆)_{y}-O-R⁶; -(CH(CH₃)CH₂CH₂)-(OC₃H₆)_{y}-O-R⁶; -(CH₂)-(OC₂H₄)_{y}-O-R⁶; -CH₂-(OC₂H₄)_{y}-O-R⁶; -(CH₂)-(OC₃H₆)_{y}-O-R⁶ und -CH₂-(OC₃H₆)_{y}-O-R⁶ ausgewählt ist und der Polyoxyalkylenrest G vorzugsweise -(CH₂)₃-(OC₂H₄)_{y}-O-R⁶ ist, wobei R⁶ für ein Wasserstoffatom oder einen C₁-C₄-Alkylrest, vorzugsweise ein Wasserstoffatom oder einen Methylrest, weiter bevorzugt ein Wasserstoffatom, steht und y für eine ganze Zahl von 5 bis 20, vorzugsweise von 5 bis 12, steht.

10. Verfahren zur Herstellung des Antischaum-Silikonfluids nach Anspruch 6 oder 7, das Folgendes umfasst
(I) in einem ersten Schritt Umsetzen
(a) eines α,ω-Dihydrogendiorganopolysiloxans der Formel HR₂SiO-(R₂SiO)ₚ-SiR₂H und ganz besonders bevorzugt H(CH₃)₂SiO-((CH₃)₂SiO)ₚ-Si(CH₃)₂H
mit
(b) einer Polyoxyalkylenverbindung der Formel R^{4'}-(O-R⁵)_{y}-O-R⁶ und ganz besonders bevorzugt CH₂=CH-CH₂-(OC₂H₄)_{y}-O-H
in Gegenwart von
(c) einem Hydrosilylierungskatalysator, vorzugsweise einem Platinkatalysator,
(d) gegebenenfalls unter feuchtigkeitsfreier Stickstoffatmosphäre, vorzugsweise bei 60 bis 120°C, vorzugsweise mit einem angemessenen Kühlsystem zur Steuerung der Temperatur infolge von exothermer Reaktion, ganz besonders bevorzugt bei 80 bis 100°C,
(II) in einem zweiten Schritt Umsetzen
(e) des aus Schritt (I) erhaltenen resultierenden Hydrosilylierungsprodukts der Formel
XR₂SiO-(R₂SiO)ₚ-SiR₂X
und ganz besonders bevorzugt H-O-(C₂H₄O)_{y}-(CH₂)₃-Si((CH₃)₂O-((CH₃)₂SiO)ₚ- (CH₃)₂Si-(CH₂)₃-(OC₂H₄)_{y}-O-H,
und
(f) eines Diorganopolysiloxans der Formel
HOR₂SiO-(R₂SiO)ₛ-SiR₂OH
und ganz besonders bevorzugt HO-(CH₃)₂SiO-((CH₃)₂SiO)ₛ-(CH₃)₂Si-OH
mit
(g) einem Aminoalkylsilan der Formel
ASiR(OR⁷)₂
und ganz besonders bevorzugt (CH₃O)₂Si(CH₃)-(CH₂)₃-NH(C₂H₄)NH₂
in Gegenwart von
(h) einem basischen Katalysator, vorzugsweise
Kaliummethoxid oder Kaliumethoxid,
und in Gegenwart von
(i) einem kettenabbrechenden Organopolysiloxan der Formel
R₃SiO-(R₂SiO)_{z}-SiR₃
und ganz besonders bevorzugt (CH₃)₃SiO-((CH₃)₂SiO)_{z}-Si(CH₃)₃
bei einer Temperatur von 80°C bis 150°C und dann nach der Umsetzung (II)
(III) Neutralisieren des basischen Katalysators (h) durch Zugabe eines Neutralisationsmittels (j), vorzugsweise eines Triorganosilylphosphats, weiter bevorzugt eines Trimethylsilylphosphats,
wobei A, X, R, R⁵, R⁶ und y die in Anspruch 6 angegebenen Bedeutungen haben und
R^{4'} für einen C₁-C₁₀-Alkenylrest mit einer endständigen Kohlenstoff-Kohlenstoff-Doppelbindung steht,
R⁷ für einen C₁-C₄-Alkylrest steht,
p für eine ganze Zahl von 10 bis 25 steht,
s für eine ganze Zahl von 2 bis 60 steht und
z für eine ganze Zahl von 0 bis 10 steht.

## Revendications

1. Poudre antimousse comprenant :
(1) 10 à 35 % en poids d'un fluide antimousse à base d'amino-silicone modifié ayant la formule XR₂Si(OSiAR)ₙ(OSiR₂)ₘOSiR₂X (I)
dans laquelle
A est un radical amino ayant la formule
-R¹-[NR²-R³-]ₓNR²₂
ou un radical
amino ayant la formule sélectionnée dans le groupe
-(CH₂)₃NHC₆H₁₁,
-(CH₂)₃NH(CH₂)₂NHC₆H₁₁,
-(CH(CH₃)CH₂CH₂)NHC₆H₁₁,
-(CH(CH₃)CH₂CH₂)NH(CH₂)NHC₆H₁₁,
-(CH₂)NHC₆H₁₁ et
-(CH₂)NH(CH₂)₂NHC₆H₁₁,
ou les formes amino protonées du radical amino A et/ou des formes amino acylées desdits radicaux amino
ci-dessus,
X est un groupe R ou un groupe polyoxyalkylène G
ayant la formule
- R⁴-(O-R⁵)_{y}-O-R⁶
R est un radical hydrocarboné monovalent comportant de 1 à 18 atomes de carbone,
R¹ est un radical alkylène C₁-C₁₀, préférablement un radical ayant la formule -CH₂CH₂CH₂-,
R₂ est un atome d'hydrogène ou un radical alkyle C₁-C₄, préférablement un atome d'hydrogène,
R³ est un radical alkylène C₁-C₁₀, préférablement un radical ayant la formule -CH₂CH₂-,
R⁴ est un radical alkylène C₁-C₁₀, préférablement un radical ayant la formule -CH₂CH₂CH₂-,
R⁵ est un radical alkylène C₁-C₄, préférablement un radical ayant la formule -CH₂CH₂- ou -CH₂CH₂(CH₃)-ou des mélanges de ceux-ci,
R⁶ est un atome d'hydrogène ou un radical alkyle C₁-C₄, préférablement un atome d'hydrogène ou un radical méthyle, plus préférablement un atome d'hydrogène,
n est un nombre entier de 1 à 6, préférablement de 1 à 3,
m est un nombre entier de 1 à 200, préférablement de 1 à 80,
x vaut 0 ou 1 et
y est un nombre entier de 5 à 20, préférablement de 5 à 12,
sous réserve qu'en moyenne, de 30 à 60 %mol, préférablement 50 %mol, des radicaux X soient des groupes polyoxyalkylène G ; et
(2) 65 à 90 % en poids d'une charge servant de support sélectionnée dans le groupe comprenant le carbonate de sodium, le sulfate de sodium, le silicate d'aluminium, le carbonate de potassium, le sulfate de potassium, le bicarbonate de sodium, le bicarbonate de potassium et la zéolite.

2. Poudre antimousse selon la revendication 1, dans laquelle le radical amino (A) est préférablement sélectionné parmi -(CH₂)₃NH₂; -(CH₂)₃NH(CH₂)₂NH₂; - (CH₂)₃NHC₆H₁₁ ; (CH₂)₃NH(CH₂)₂NHC₆H₁₁ ; - (CH(CH₃)CH₂CH₂)NH₂ ; -(CH(CH₃)CH₂CH₂)NH(CH₂)NH₂ ; - (CH₂)NH₂ ; -(CH₂)NH(CH₂)₂NH₂; -(CH(CH₃)CH₂CH₂)NHC₆H₁₁ ; -(CH(CH₃)CH₂CH₂)NH(CH₂)NHC₆H₁₁ ; -(CH₂)NHC₆H₁₁ ; - (CH₂) NH(CH₂)₂NHC₆H₁₁, ses formes amino protonées et/ou des formes amino acylées desdits radicaux amino ci-dessus, et idéalement sélectionné parmi - (CH₂)₃NH₂ et (CH₂)₃NH(CH₂)₂NH₂.

3. Poudre antimousse selon la revendication 1 ou 2, dans laquelle l'indice d'amine dudit fluide antimousse à base de silicone modifiée ayant la Formule (I), pour optimiser la nature antimousse dudit fluide à l'étape de rinçage, comprend un indice d'amine de 0,6 mg de KOH/g de polymère à 2,0 mg de KOH/g de polymère du fluide à base de silicone ayant la Formule (I) et idéalement comprend un indice d'amine de 1,0 à 1,5.

4. Poudre antimousse selon la revendication 1 ou 2, dans laquelle dans ladite Formule (I) le radical polyoxyalkylène G est sélectionné parmi -(CH₂)₃-(OC₂H₄)_{y}-O-R⁶; -(CH(CH₃)CH₂CH₂)-(OC₂H₄)_{y}-O-R⁶; - (CH₂)₃(OC₃H₆)y-O-R⁶; -CH(CH₃)CH₂CH₂)-(OC₃H₆)_{y}-O-R⁶; - (CH₂)-(OC₂H₄)_{y}-O-R⁶; -CH₂-(OC₂H₄)_{y}-O-R⁶; -(CH₂)-(OC₃H₆)_{y}-O-R⁶ et -CH₂-(OC₃H₆)_{y}-O-R⁶, et le radical polyoxyalkylène G est préférablement -(CH₂)₃-(OC₂H₄)_{y}-O-R⁶, où R⁶ est un atome d'hydrogène ou un radical alkyle C₁-C₄, préférablement un atome d'hydrogène ou un radical méthyle, plus préférablement un atome d'hydrogène, et y est un nombre entier de 5 à 20, préférablement de 5 à 12.

5. Procédé de fabrication de la poudre antimousse selon la revendication 1 ou 2, comprenant les étapes qui consistent à :
(i) agiter et sécher la charge servant de support à une température de 100 °C à 150 °C,
(ii) mélanger la charge servant de support séchée avec le fluide antimousse à base d'amino-silicone modifié ayant la Formule (I) à une température de 100 °C à 150 °C et
(iii) refroidir et obtenir ainsi ladite poudre antimousse.

6. Fluide antimousse à base de silicone conçu pour une utilisation dans des formulations détergentes à base de fluide/poudre ayant la formule
XR₂Si(OSiAR)ₙ(OSiR₂)ₘOSiR₂X (I)
dans laquelle
A est un radical amino ayant la formule
-R¹- LNR²-R³-] ₓNR²₂
ou un radical amino ayant la formule sélectionnée
dans le groupe
- (CH₂)₃NHC₆H₁₁,
- (CH₂)₃NH(CH₂)₂NHC₆H₁₁,
- (CH (CH₃)CH₂CH₂)NHC₆H₁₁,
- (CH(CH₃)CH₂CH₂)NH(CH₂)NHC₆H₁₁,
- (CH₂) NHC₆H₁₁ et
- (CH₂) NH (CH₂) ₂NHC₆H₁₁,
ou les formes amino protonées du radical amino A et/ou des formes amino acylées desdits radicaux amino ci-dessus,
X est un groupe R ou un groupe polyoxyalkylène G
ayant la formule
- R⁴-(O-R⁵) _{y}-O-R⁶
R est un radical hydrocarboné monovalent comportant de 1 à 18 atomes de carbone,
R¹ est un radical alkylène C₁-C₁₀, préférablement un radical ayant la formule -CH₂CH₂CH₂-,
R² est un atome d'hydrogène ou un radical alkyle C₁-C₄, préférablement un atome d'hydrogène,
R³ est un radical alkylène C₁-C₁₀, préférablement un radical ayant la formule -CH₂CH₂-,
R⁴ est un radical alkylène C₁-C₁₀, préférablement un radical ayant la formule -CH₂CH₂CH₂-,
R⁵ est un radical alkylène C₁-C₄, préférablement un radical ayant la formule -CH₂CH₂- ou -CH₂CH₂(CH₃)-ou des mélanges de ceux-ci,
R⁶ est un atome d'hydrogène ou un radical alkyle C₁-C₄,
préférablement un atome d'hydrogène ou un radical méthyle, plus préférablement un atome d'hydrogène,
n est un nombre entier de 1 à 6, préférablement de 1 à 3,
m est un nombre entier de 1 à 200, préférablement de 1 à 80,
x vaut 0 ou 1 et
y est un nombre entier de 5 à 20, préférablement de 5 à 12, sous réserve qu'en moyenne de 30 à 60 %mol, préférablement 50 %mol, des radicaux X soient des groupes polyoxyalkylène G.

7. Fluide antimousse à base de silicone selon la revendication 6, dans lequel le radical amino (A) est préférablement sélectionné parmi -(CH₂) ₃NH₂ ; -(CH₂) ₃NH(CH₂)₂NH₂ ; -(CH₂) ₃NHC₆H₁₁ ;-(CH₂)₃NH(CH₂)₂NHC₆H₁₁ ; - (CH (-CH₃) CH₂CH₂) NH₂ ;-(CH(CH₃)CH₂CH₂)NH(CH₂)NH₂ ; -(CH₂)NH₂ ;-(CH₂)NH(CH₂)₂NH₂ ; - (CH(CH₃) CH₂CH₂) NHC₆H₁₁ ;-(CH(CH₃)CH₂CH₂)NH(CH₂)NHC₆H₁₁;- (CH₂) NHC₆H₁₁ ;-(CH₂) NH (CH₂) ₂NHC₆H₁₁, ses formes amino protonées et/ou des formes amino acylées desdits radicaux amino ci-dessus, et idéalement sélectionné parmi - (CH₂) ₃NH₂ et -(CH₂) ₃NH (CH₂) ₂NH₂.

8. Fluide antimousse à base de silicone selon la revendication 6 ou 7, dans lequel l'indice d'amine dudit fluide antimousse à base de silicone modifiée ayant la Formule (I), pour optimiser la nature antimousse dudit fluide à l'étape de rinçage, comprend un indice d'amine de 0,6 mg de KOH/g de polymère à 2,0 mg de KOH/g de polymère du fluide à base de silicone ayant la formule (I) et idéalement comprend un indice d'amine de 1,0 à 1,5.

9. Fluide antimousse à base de silicone selon la revendication 6 ou 7, dans lequel dans ladite Formule (I) le radical polyoxyalkylène G est sélectionné parmi -(CH₂)₃-(OC₂H₄)y-O-R⁶;-(CH(CH₃)CH₂CH₂)-(OC₂H₄)_{y}-O-R⁶; -(CH₂)₃(OC₃H₆)_{y}-O-R⁶ ;-CH(CH₃)CH₂CH₂)-(OC₃H₆)_{y}-O-R⁶ ; -(CH₂)-(OC₂H₄)_{y}-O-R⁶ ;-CH₂-(OC₂H₄)_{y}-O-R⁶; -(CH₂)-(OC₃H₆)_{y}-O-R⁶ et -CH₂-(OC₃H₆)y-O-R⁶, et le radical polyoxyalkylène G est préférablement -(CH₂) ₃-(OC₂H₄) _{y}-O-R⁶, où R⁶ est un atome d'hydrogène ou un radical alkyle C₁-C₄, préférablement un atome d'hydrogène ou un radical méthyle, plus préférablement un atome d'hydrogène, et y est un nombre entier de 5 à 20, préférablement de 5 à 12.

10. Procédé de fabrication du fluide antimousse à base de silicone selon la revendication 6 ou 7, comprenant :
(I) la réaction dans une première étape
(a) d'un α, ω-dihydrogéno-diorganopolysiloxane ayant la formule HR₂SiO-(R₂SiO)ₚ,-SiR₂H, et idéalement H (CH₃) ₂SiO- ((CH₃)₂SiO)ₚ-Si (CH₃)₂H, avec
(b) un composé de polyoxyalkylène ayant la formule R^{4'}-(O-R⁵)_{y}-O-R⁶,
et idéalement CH₂=CH-CH₂-(OC₂H₄)_{y}-O-H,
en présence de
(c) un catalyseur d'hydrosilylation, préférablement un catalyseur contenant du platine,
(d) la réaction étant optionnellement conduite sous une atmosphère d'azote sans humidité, préférablement à une température de 60 à 120 °C, préférablement avec un système de refroidissement approprié pour contrôler la température due à la réaction exothermique, la réaction étant idéalement conduite à une température de 80 à 100 °C,
(II) la réaction dans une deuxième étape
(e) du produit d'hydrosilylation ainsi obtenu à l'étape (I) ayant la formule
XR₂SiO-(R₂SiO)ₚ,-SiR₂X,
et idéalement H-O-(C₂H₄O)_{y}-(CH₂)₃-Si (CH₃)₂O-((CH₃)₂SiO)ₚ-(CH₃)₂Si-(CH₂)₃-(OC₂H₄)_{y}-O-H,
et
(f) un diorganopolysiloxane ayant la formule HOR₂SiO-(R₂SiO)ₛ-SiR₂OH, et idéalement HO-(CH₃)₂SiO-((CH₃)₂SiO)ₛ-(CH₃)₂SiOH, avec
(g) un aminoalkylsilane ayant la formule ASiR (OR⁷)₂,
et idéalement (CH₃O)₂Si (CH₃)-(CH₂)₃-NH(C₂H₄)NH₂,
en présence de
(h) un catalyseur basique, préférablement du méthoxyde de potassium ou de l'éthoxyde de potassium,
et en présence de
(i) un organopolysiloxane de terminaison de chaîne ayant la formule
R₃SiO- (R₂SiO)_{z}-SiR3,
et idéalement (CH₃)₃SiO-((CH₃) ₂SiO)_{z}-Si(CH₃)₃,
à une température de 80 °C à 150 °C,
puis, après la réaction (II),
(III) la neutralisation du catalyseur basique (h), par addition d'un agent neutralisant (j),
préférablement un phosphate de triorganosilyle, plus préférablement un phosphate de triméthylsilyle,
où A, X, R, R⁵, R⁶ et y ont les significations mentionnées dans la revendication 6 et
R^{4'} est un radical alcényle C₁-C₁₀ comportant une double liaison carbone-carbone terminale,
R⁷ est un radical alkyle C₁-C₄,
p est un nombre entier de 10 à 25,
s est un nombre entier de 20 à 60 et
z est un nombre entier de 0 à 10.
